# EUROPEAN PATENT APPLICATION

(11) **EP 2 163 333 A1**
(43) Date of publication of application: **17.03.2010**
(21) Application number: 09252104.6
(22) Date of filing: 01.09.2009
(51) Int. Cl.: B23B 5/16

(54) **Deburring device**

(30) Priority: 11.09.2008 GB 0816583; 13.05.2009 GB 0908175
(71) Applicant: Hyland, William Joseph, Leeds LS8 4AW (GB)
(72) Inventor: Hyland, William Joseph, Leeds LS8 4AW (GB)
(74) Representative: Wood, Graham

(57) **Abstract**

A deburring device (4) with one or more edges having a pair of notches (6, 6', 8, 8', 10, 10', 12, 12') for receiving the end wall of a pipe (14), such that the device and the pipe are relatively rotateable to remove burrs (16) from the end wall of the pipe, **characterised in that** the distance between an edge with a pair of notches and an edge thereopposite is greater than the distance (22, 18, 24, 20) between at least one pair of notches.

## Description

The invention to which this application relates is a deburring device for removing rough edges and burrs from pipes.

The most common problem with plumbing for waste is blockage typically caused by poor preparation.

When copper or plastic pipes are cut with a hacksaw, rough edges are often created around the cut, such roughness in the form of small protrusions such as burrs. The burrs typically project beyond the circumference of the pipe which may then prevent smooth connections between pipes being formed.

For example, when a pipe is inserted into a flush-fit fitting, the burrs can push in the rubber seal usually found around the inner circumference of the fitting, thereby causing leaks to occur between the fitting and the pipe. In addition, such burrs can cause hair and fabric to be caught which may eventually lead to blockages of the pipe as more material gets trapped.

A conventional pipe deburrer comprises a cylinder with a cone mounted therein, the cone having cutting edges such that when the cylinder is placed over the pipe end and rotated, the cutting edges engage the edge of the pipe and remove burrs.

Another known pipe deburrer comprises a cross-shaped portion for the user to grip into which notches are formed, and a cylinder which fits inside the pipe to guide the user in rotating the notches to deburr the pipe.

The problem with such devices is that they are usually limited to use with one size of pipe, and because of the typically cylindrical housing they roll around and are easily lost by plumbers or other users that work on pipes. In addition they are complex to manufacture and therefore expensive, so few people in the trade use them.

The aim of the present invention is to provide a device suitable for deburring a plurality of pipes which is easy to manufacture, small, and portable, but which does not easily get lost.

In an aspect of the invention, there is provided a deburring device with one or more edges having a pair of notches for receiving the end wall of a pipe, such that the device and the pipe are relatively rotateable to remove burrs from the end wall of the pipe, **characterised in that** the distance between an edge with a pair of notches and an edge thereopposite is greater than the distance between at least one pair of notches.

Therefore the device is of a large enough size for the user to firmly grip in the palm of their hand and apply sufficient force to the pipe to effect efficient deburring as they rotate the same.

Typically the device is provided with a plurality of edges each having at least one notch.

Typically each edge is provided with a pair of spaced notches. Typically the notches of each pair are spaced apart by a different distance. As such, the device has the advantage that adjustment means, which may be difficult to use in enclosed spaces, are not required to use the device with pipes of different sizes.

Typically the device is provided with at least two oppositely facing edges. Preferably the distance between said edges is at least 1.5x the distance between the notches of at least one of the pairs of notches. More preferably the distance between said edges is at least 2x the distance between the notches of at least one pair of the notches.

Typically the edges are provided on a plate. Typically the plate is substantially flat. This has the advantage that the plate does not roll away when placed on a surface.

In one embodiment the plate includes a protrusion on the planar surface to allow at least one edge to be spaced apart from the supporting surface when placed thereon. Thus a user can easily pick up the device as one edge is raised and allows the user to get a grip on the same.

Typically the protrusion is formed by denting the plate, thereby creating a recess on one side and a corresponding protrusion on the other.

In one embodiment the plate includes a hole. The hole can be used for hanging the device.

In one embodiment the plate is square, although it will be appreciated that the plate could be rectangular, circular, or any other geometric shape.

Typically each edge of the plate is provided with a pair of notches spaced apart by a different distance, such that for example, a square device could be used to deburr four different sized pipes.

In one embodiment the notches of each pair are spaced apart by any or any combination of the distances 22mm, 32mm, 40mm, or 50mm (corresponding to approximate imperial measurements of ¾ ,1¼, 1½ and 2 inches respectively). These distances match up with the common diameters of pipe.

In one embodiment the notches are provided with sharpened edges. This improves the deburring effect of the device on the pipe.

Typically the device is made from stainless steel. The device is therefore shiny and therefore easy to find by a user. It will be appreciated that the device could be made from other resilient shiny metals.

In a further aspect of the invention there is provided a deburring device for receiving the end wall of a pipe, relative rotation between the device and the pipe removing burrs from the end wall, the device being in the form of a plate having at least two oppositely facing edges, each of said edges being provided with a pair of spaced notches to locate with two spaced locations of a pipe wall, **characterised in that** the distance between said edges being greater than the distance between the notches of at least one of the pairs of the notches.

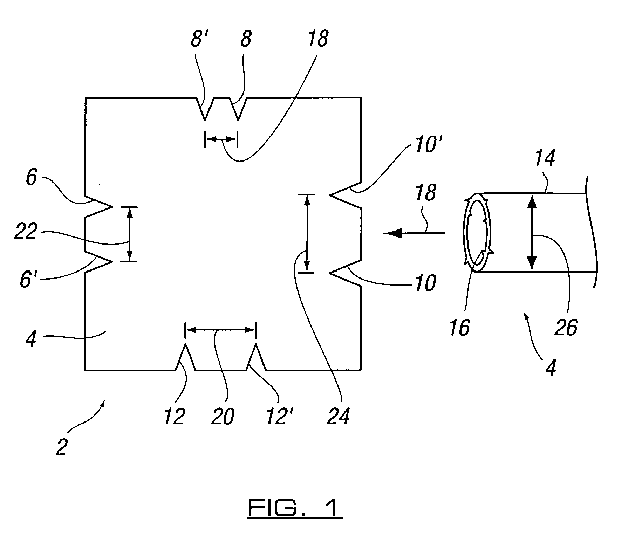

Specific embodiments of the invention are now described wherein:-
Figure 1 illustrates a deburring device in accordance with an embodiment of the invention

With reference to Figure 1, there is illustrated a deburring device 2 comprising a square plate 4, and on each edge of the plate, a pair of notches 6, 6', 8, 8', 10, 10', 12, 12', spaced apart by a different distance.

The length of each side of the plate is greater than the distance between the notches in that side and/or the notches on the opposite side of the plate. In this case the distance between each pair of notches matches up with the common diameters of the pipe, namely 22mm, 32mm, 40mm and 50mm (corresponding to approximate imperial diameters of ¾, 1¼, 1½ and 2 inches respectively) as indicated by the arrows 18, 20, 22, 24 respectively. Since the length of the side of the plate is about 75mm, this means that the plate has a sufficient diameter to enable it to be firmly gripped in the hand and for sufficient force to be then applied to the pipe to enable the burrs to be removed therefrom.

In use, the user grips the plate and inserts the end wall of a pipe 14 into a suitable pair of notches, corresponding to the diameter of the pipe, as indicated by arrow 18. In this example the pipe has an internal diameter of 50mm, as indicated by arrow 26.

The pipe may have burrs 16 where it was cut. However, relative rotation of the plate with respect to the pipe removes such burrs. Typically a user holds the pipe in one hand, then pushes the pipe into the notches and rotates the device against the pipe. Thus by twisting the pipe and deburring device in opposite directions, burrs are removed from the end of the pipe leaving a smooth finish.

As the device is flat it does not roll away and therefore when a user is fitting the pipe, typically on their knees, the device is easy to find as it designed to maintain its position. In addition, if the user accidentally kneels on the device, in contrast to conventional devices, it will not damage the device or harm the user as it is substantially flat.

In the embodiment shown the device is made from stainless steel. This helps the user find the device as it is shiny and therefore highly visible.

Advantageously the four differently spaced pairs of notches can fit four different pipes. It is also possible for the device to be used with an additional four sizes of pipes by fitting the corner of the plate into the pipe rather than the edge, such that a pair of notches is formed from two notches on adjacent edges.

It will be appreciated by persons skilled in the art that the present invention also includes further additional modifications made to the device which does not affect the overall functioning of the device.

## Claims

1. A deburring device (4) with one or more edges having a pair of notches (6, 6', 8, 8', 10, 10', 12, 12') for receiving the end wall of a pipe (14), such that the device and the pipe are relatively rotateable to remove burrs (16) from the end wall of the pipe, **characterised in that** the distance between an edge with a pair of notches and an edge thereopposite is greater than the distance (22, 18, 24, 20) between at least one pair of notches.

2. A deburring device according to claim 1 wherein said distance between the edges is sufficient to enable the device to be firmly grasped in the hand of the user so that sufficient force may easily be applied to the end of the pipe to remove burrs therefrom.

3. A deburring device according to claim 1 or 2 wherein the device is provided with a plurality of edges each having at least one notch.

4. A deburring device according to any preceding claim wherein each edge is provided with a pair of spaced notches.

5. A deburring device according to any preceding claim wherein the notches of each pair are spaced apart by a different distance.

6. A deburring device according to claim 5 wherein the notches of each pair are spaced apart by any or any combination of the approximate distances 22mm, 32mm, 40mm, or 50mm.

7. A deburring device according to any preceding claim wherein said distance between said edges is at least 1.5x said distance between the notches of a pair.

8. A deburring device according to any preceding claim wherein the distance between said edges is at least 2x said distance between the notches of a pair.

9. A deburring device according to any preceding claim wherein the edges are provided on a plate.

10. A deburring device according to claim 9 wherein the plate is substantially flat.

11. A deburring device according to claim 9 or 10 wherein the plate includes a protrusion on the planar surface to allow at least one edge to be spaced apart from the supporting surface when placed thereon.

12. A deburring device according to any of claims 9-11 wherein the plate includes a hole to allow the device to be hung therefrom.

13. A deburring device according to any of claims 9-12 wherein the plate is substantially rectangular.

14. A deburring device for receiving the end wall of a pipe, relative rotation between the device and the pipe removing burrs from the end wall, the device being in the form of a plate having at least two oppositely facing edges, each of said edges being provided with a pair of spaced notches to locate with two spaced locations of a pipe wall, **characterised in that** the distance between said edges being greater than the distance between the notches of at least one of the pairs of the notches.

15. A deburring device according to any previous claim wherein said distance between the edges is about 75mm to allow the device to be firmly gripped in the palm of the hand of a user while rotating the device against the end wall of a pipe.
